# EUROPEAN PATENT APPLICATION

(11) **EP 2 554 959 A1**
(43) Date of publication of application: **06.02.2013**
(21) Application number: 11006337.7
(22) Date of filing: 02.08.2011
(51) Int. Cl.: G01J 5/00, G01J 5/10

(54) **Method and device for measuring the temperature of hot molten metal**

(71) Applicant: Tata Steel IJmuiden BV, 1970 CA IJmuiden (NL)
(72) Inventor: Delicaat, Christiaan Louis Augustinus, 1970 CA Ijmuiden (NL); Van Buren, Renée, 1970 CA Ijmuiden (NL)
(74) Representative: Kruit, Jan

(57) **Abstract**

The invention relates to a method for measuring the temperature of hot molten metal flowing out of a container, using thermal radiation.

According to the invention, an imaging pyrometer is used to measure the temperature of the flow of hot molten metal.

The invention also relates to a device for measuring the temperature of a flow of hot molten metal using the method according to the invention.

## Description

The invention relates to a method for measuring the temperature of hot molten metal flowing out of a container, using a pyrometer. The invention also relates to a device for measuring a flow of hot molten metal using the method according to the invention.

Measuring the temperature of hot molten metal is difficult, especially when the temperature is very high, such as with molten steel. Usually a thermocouple is used that is somehow dipped into the hot melt or that is extended through the wall of the vessel containing the hot molten metal. In practice, it is found that thermocouple measurements under harsh conditions are not easy, because the measuring equipment is vulnerable. This means that measuring the temperature of hot molten metal is costly.

Other examples of devices using a contact sensor for measuring the temperature of hot molten metal are known from for instance US 3745834, US 4647222, US 5447373 and US 2008/0205480. In all these examples, the sensor has to contact the molten metal.

Measuring the temperature of a remote object, such as a hot product, using a pyrometer is well known, for instance from US 5165796. A manufacturer of pyrometers, Pyrometer Instrument Company, writes on its website that pyrometers are used for measuring temperature without contacting the surface of for instance refractory furnaces and industrial ovens. It will be clear that it is possible, at least in theory, to use pyrometers for remotely measuring the temperature of a hot molten metal, such as molten steel, also when the hot molten metal flows from a container.

However, the temperature at the surface of the hot molten metal is not always representative for the temperature of the hot molten metal in the container or of the flow of molten metal. Usually a pyrometer only measures a single spot of a surface, and thus it could be that the measured temperature of the surface of the hot molten metal is not indicative for the temperature of the hot metal as such.

It is an object of the invention to provide a method for measuring the temperature of a flow of hot molten metal that is accurate.

It is another object of the invention to provide a method for measuring the temperature of a flow of molten metal that is easy to perform.

It is a further object of the invention to provide a method for measuring the temperature of a flow of molten metal that is cost effective.

It is also an object of the invention to provide a device for measuring the temperature of a flow of hot molten metal.

According to the invention, one or more of these objects can be reached with a method for measuring the temperature of hot molten metal flowing out of a container, using thermal radiation, wherein an imaging pyrometer is used to measure the temperature of the flow of the hot molten metal.

The use of an imaging pyrometer has the advantage that not one single spot is measured, but that a substantial area of the surface of the flow of hot molten metal can be measured. Since the inventors have found that the surface of a flow of hot molten metal does not have a constant temperature, the information of the imaging pyrometer can be used to determine the temperature differences in the area measured by the imaging pyrometer.

According to a preferred embodiment, the imaging pyrometer measures the temperature of the flow of hot molten metal over at least half of the surface of the flow in front of the imaging pyrometer. When at least 50 % of the surface of the flow is measured, usually at least part of the measured surface will be indicative for the temperature of the molten metal flow.

Preferably, the imaging pyrometer measures at least 100 temperature positions on the surface of the flow of hot molten metal, more preferably at least 1000 temperature positions, still more preferably at least 10.000 temperature positions, most preferably at least 100.000 temperature positions. The more temperature positions are measured, the better it will be possible to determine the temperature of the molten metal flow. Imaging pyrometers that can measure this number of positions are known and commercially available.

According to a preferred embodiment the imaging pyrometer measures the intensity of the radiation over an area of the flow of hot molten metal, and the measured intensities of radiation are tabled in a histogram to determine the variation in intensities over the area of the flow of hot molten metal. By measuring the intensity of radiation over the measured surface and tabling these measurements in a histogram, a statistic indication is given about the radiation of the measured surface and the distribution of the temperatures of the measured surface.

In the above preferred embodiment a peak of intensity in the histogram is an indication for the temperature of the flow of hot molten metal. Since the molten metal flow itself will have an approximately constant temperature, it can be expected that a number of measurements will give the same intensity of radiation, and thus that a peak in the histogram will be an indication for the temperature of the flow of hot molten metal.

Preferably, a computer program is used to provide the histogram and to determine a peak of intensity in the histogram. Using a computer program provides a fast and easy way for producing the histogram and a peak of intensity in the histogram.

According to a preferred embodiment the imaging pyrometer measures the temperature of the flow of hot molten metal at least 1 time per second, preferably at least 5 times per second, more preferably at least 10 times per second. When the temperature is measured often, no important loss of information occurs when a temperature measurement by the pyrometer does not provide usable results once in a while.

Preferably, the hot molten metal flow of which the temperature is measured is molten iron or steel. Molten iron or steel has a very high temperature in a steel plant, usually between 1100° C and 1600° C, so a direct temperature measurement is difficult and it is preferred to use the method according to the invention.

According to a preferred embodiment the imaging pyrometer measures radiations between 650 nm and 700 nm. In this part of the spectrum the radiation is intense, at least for iron and steel.

Preferably the imaging pyrometer measures at a distance of at least 5 metres from the hot iron or steel flow. In this way it is possible to shield the pyrometer from the intense radiation of the hot iron or steel.

According to a preferred embodiment the imaging pyrometer measures a hot iron flow from a torpedo with molten iron into a ladle. The temperature of this hot iron flow is difficult to measure accurately in another way.

According to another aspect of the invention, a method is provided to determine the temperature of hot molten metal in a container filled by a flow of hot molten metal, wherein the temperature measurement of the flow of hot molten metal according to the first aspect of the invention is used to calculate the temperature of hot molten metal in the container. With the temperature measurement as discussed above, the temperature of the hot metal flow can be measured accurately, and so the temperature of the hot molten metal in the container can be calculated accurately as well. Knowing the temperature of the hot molten metal in the container accurately is important for the subsequent process steps in for instance the steel making process, where the amount of scrap to be added to the hot iron is determined by the temperature of the hot iron leaving the torpedo.

According to a third aspect of the invention a device is provided for measuring the temperature of a flow of hot molten metal using the method according to the first aspect of the invention, consisting of an imaging pyrometer which is placed at a distance of between 5 and 15 metres from the position where a flow of hot molten metal passes through during use, the pyrometer being protected by a protecting cover, and a computer being connected to the pyrometer to control the measurements of the pyrometer with a computer program. This device makes it possible to accurately measure the temperature of a flow of hot molten metal. The shielding of the pyrometer by a protective cover provides the device with a long life span, and the use of a computer makes it possible to produce the measurements in a fast way.

Preferably the computer provides a histogram of the measurements of the imaging pyrometer real-time. The histogram makes it easy to determine the actual temperature of the hot molten metal flow.

According to a preferred embodiment of the invention the device is placed above the plane of the rim of a ladle for receiving a hot iron flow from a torpedo. In this way the pyrometer can easily measure the temperature of the surface of the flow.

The invention will be elucidated with reference to an example.

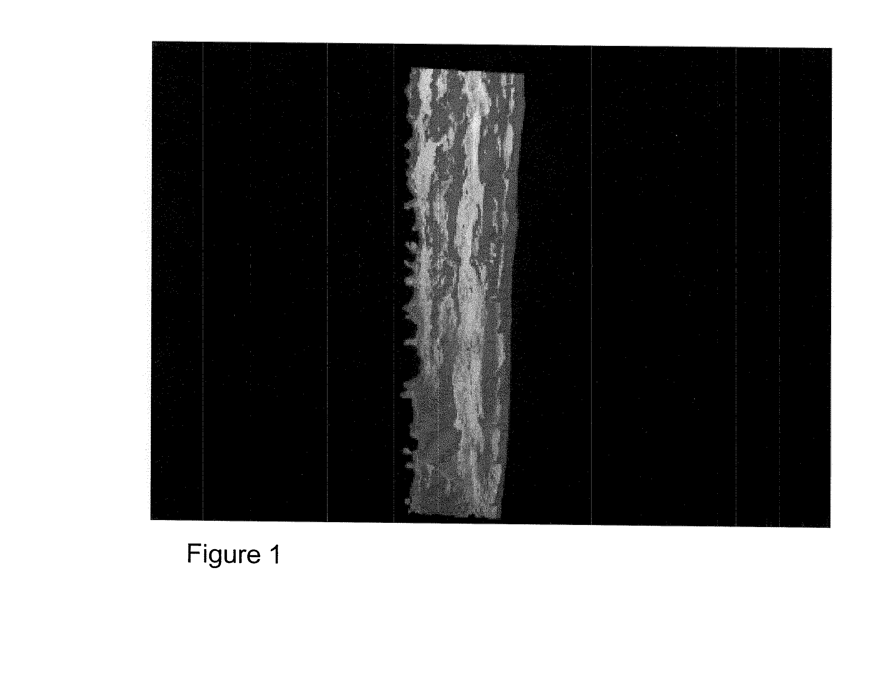

Figure 1 shows an image of the radiation of part of the flow of hot molten iron at a certain moment in time from a torpedo that has been filled with liquid iron from a blast furnace into a ladle.

The picture shown in the figure is an image made by an imaging pyrometer as used according to the invention. The pyrometer used is a ccd camera with a resolution of 1400 x 1000 pixels. The camera has a wide field of view, so the positioning of the torpedo above the ladle is not critical: the flow of molten iron will always be detected. The image shown is a very clear one, but often the flow of hot molten iron is partly covered by smoke, so less than the total surface of the flow in the aperture of the pyrometer can be used. The presence of smoke can lead to the discarding of the measurement.

As is clear from the picture, the intensity of the radiation by the flow of hot molten iron is not the same over the shown area, but varies in strokes and patches over the surface. It is expected that these variation are caused by oxides on the surface of the flow of molten iron. The imaging pyrometer provides a large number of measurements of the radiation intensity over the surface of the flow.

A computer programme processes these measurements and provides a histogram of the intensities of the measurements. The histogram usually shows one or more peaks, and the inventors have found that a peak in the histogram is indicative for the temperature of the hot molten iron in the flow from the torpedo into the ladle at a certain moment in time.

The image made by the pyrometer can be repeated, for instance at 10 times per second. These repeated measurements can be used to accurately track the temperature of the flow of hot molten iron throughout the emptying of the torpedo into the ladle, and with this information the temperature of the molten iron in the ladle can be calculated. If a number of measurements has to be discarded due to smoke in front of the flow, this will not influence the calculated temperature. This is valuable information for the further steps in the steelmaking process, for instance for determining the amount of scrap needed for steel making in a converter. The images can also give other information for the operators.

The imaging pyrometer can be placed at a distance of at least 5 meters from the flow of molten iron, and has to be protected by a protective cover against the heat radiated by the flow of molten iron, which usually has a temperature of approximately 1400° C. This remotely measuring of the temperature provides an accurate and easy measurement, which can be performed semi-automatically with a minimum of lifecycle costs of the equipment.

## Claims

1. Method for measuring the temperature of hot molten metal flowing out of a container, using thermal radiation, **characterised in that** an imaging pyrometer is used to measure the temperature of the flow of the hot molten metal.

2. Method according to claim 1, wherein the imaging pyrometer measures the temperature of the flow of hot molten metal over at least half of the surface of the flow in front of the imaging pyrometer.

3. Method according to claim 1 or 2, wherein the imaging pyrometer measures at least 100 temperature positions on the surface of the flow of hot molten metal, preferably at least 1000 temperature positions, more preferably at least 10.000 temperature positions, most preferably at least 100.000 temperature positions.

4. Method according to claim 1, 2 or 3, wherein the imaging pyrometer measures the intensity of the radiation over an area of the flow of hot molten metal, and the measured intensities of radiation are tabled in a histogram to determine the variation in intensities over the area of the flow of hot molten metal.

5. Method according to claim 4, wherein a peak of intensity in the histogram is an indication for the temperature of the flow of hot molten metal.

6. Method according to claim 4 or 5, wherein a computer program is used to provide the histogram and to determine a peak of intensity in the histogram.

7. Method according to any one of the preceding claims, wherein the imaging pyrometer measures the temperature of the flow of hot molten metal at least 1 time per second, preferably at least 5 times per second, more preferably at least 10 times per second.

8. Method according to any one of the preceding claims, wherein the hot molten metal flow of which the temperature is measured is molten iron or steel.

9. Method according to claim 8, wherein the imaging pyrometer measures radiations between 650 nm and 700 nm.

10. Method according to claim 8 or 9, wherein the imaging pyrometer measures at a distance of at least 5 metres from the hot iron or steel flow.

11. Method according to claim 8, 9 or 10, wherein the imaging pyrometer measures a hot iron flow from a torpedo with molten iron into a ladle.

12. Method to determine the temperature of hot molten metal in a container filled by a flow of hot molten metal, characterised that the temperature measurement of the flow of hot molten metal according to any one of claims 1 - 11 is used to calculate the temperature of hot molten metal in the container.

13. Device for measuring the temperature of a flow of hot molten metal using the method according to any one of claims 1 - 11, consisting of an imaging pyrometer which is placed at a distance of between 5 and 15 metres from the position where a flow of hot molten metal passes through during use, the pyrometer being protected by a protecting cover, and a computer being connected to the pyrometer to control the measurements of the pyrometer with a computer program.

14. Device according to claim 13, wherein the computer provides a histogram of the measurements of the imaging pyrometer real-time.

15. Device according to claim 13 or 14, wherein the device is placed above the plane of the rim of a ladle for receiving a hot iron flow from a torpedo.
